# EUROPEAN PATENT APPLICATION

(11) **EP 1 921 581 A1**
(43) Date of publication of application: **14.05.2008**
(21) Application number: 06023209.7
(22) Date of filing: 08.11.2006
(51) Int. Cl.: G06T 7/00, G06T 7/20

(54) **Method and apparatus for monitoring a moving object**

(71) Applicant: Smarteree GmbH, 6300 Zug (CH)
(72) Inventor: Lei, Bangjun, 3067 AR Rotterdam (NL); Zanen, Eduard, 3632 ER Loenen ann de Vecht (NL)
(74) Representative: Balsters, Robert

(57) **Abstract**

The present invention relates to a method of monitoring a moving object in video images, comprising:
- receiving a plurality of video images from the video system;
- defining in the video-images at least one gate having sides forming a closed loop, the loop including at least:
- a first side;
- a second side opposite the first side; and
- one or more further sides arranged between the first and second sides so as to define the extent of the gate;

- tracking the moving object in the video-images;
- generating a signal indicating that a tracked object has passed the gate on the condition that a) the moving object has crossed one of the first side and the second side of the gate; b) the moving object has temporarily stayed inside the gate; and c) the moving object has crossed the opposite side of the gate.

## Description

The present invention relates to a method of monitoring a moving object in video images provided by a video system. The invention also relates to an apparatus for monitoring a moving object in video images provided by a video system.

For monitoring moving objects, such as persons, animals, and vehicles, in various applications, such as video monitoring, traffic monitoring, person counting, triggering alarms on intruding protected areas, often use is made of optical information derived from video images provided by one or more video cameras.

One of the advantages of employing optical information is the ease of capturing the optical information. This capturing process can be carried out instantly and without to much effort with any off-the-shelf video camera. And, with the continuous decreasing of the camera price, it becomes cheaper and cheaper to obtain optical information from scenes of interest. After being captured by an arbitrary video camera, the optical information will be converted into signals having a suitable digital format. The signals may be stored temporarily or permanently and subsequently presented in the form of video images on a display.

For extracting moving objects from optical information various processing techniques have been proposed. In background subtraction based methods first a model of the static scene is established and then from each frame this background model is subtracted to get all moving objects. In for instance optical flow based methods first the optical flows in each frame are estimated and then similar optical flows are grouped into individual moving objects. Further, those objects are tracked based on certain criteria through video frames to obtain their individual moving paths (trajectories).

US 2005/0276446 A1 discloses an apparatus and a method are described for extracting moving objects form video data, wherein a first classification module determines whether the pixels of a captured video image belong to a background region and a second classification module determines whether pixels not belonging to a background )region in fact belong to a moving object.

For the purpose of monitoring objects once they have been detected from a series of video images, various further image processing techniques have been described. In for instance US 2004/0105570 A1 a video-based surveillance system is disclosed wherein a user can draw a virtual tripwire on the video image. The video tripwire is then monitored by the system. When the system detects a crossing of the virtual tripwire, a response or event is triggered, for instance taking a snapshot of the person crossing the tripwire. Using one tripwire it is difficult to designate the in and out directions across a tripwire. Therefore, in order to also determine the direction of a crossing of the virtual tripwire, secondary (dummy) virtual tripwires on either side of the actual tripwire are entered by the user. The system determines in a first step whether the actual tripwire is crossed and then determines in a second step in what order the secondary tripwires are crossed. From both steps the direction of a crossing may be derived.

However, in the arrangement with one actual, primary tripwire and two secondary tripwires the object may first pass the first secondary wire and then go away to any places without passing either the primary wire or the other secondary wire. Later on the object may move back to pass the another wire. This makes the monitoring of the moving object less accurate and reduces the robustness of the known surveillance method.

It is an object of the present invention to provide a an improved method and apparatus for monitoring a moving object in video images provided by a video system, wherein at least the above-mentioned drawbacks have been obviated.

It is a further object of the present invention to provide a more user-friendly method and apparatus for monitoring a moving object.

According to a first aspect of the present invention the method of monitoring a moving object in video images provided by a video system comprises:
- receiving a plurality of video images from the video system;
- defining in the video-images at least one gate having sides forming a closed loop, the loop including at least a first side, a second side opposite the first side; and one or more further sides arranged between the first and second sides so as to define the extent of the gate;
- tracking the moving object in the video-images;
- generating a signal indicating that a tracked object has passed the gate on the condition that a) the moving object has crossed one of the first side and the second side of the gate; b) the moving object has temporarily stayed inside the gate; and c) the moving object has crossed the opposite side of the gate.

Since a gate as described herein has one or more further sides to constrain the spatial dimension of the gate, a better accuracy can be obtained. For instance, when an object first passes the first side of the gate and then disappears or leaves the gate through the same side and/or through any of the further sides, then the crossing of the gate may be marked as invalid.

Generally, the noise and loitering tolerance may be improved as well, since only when an object passes both inside and outside sides of a gate, it can be claimed having successfully passed the gate. In this way one can effectively avoid false signals brought about by movement of spurious objects, for instance as a result of noise, or loitering of true objects.

Furthermore, the present method enables a definition of a gate having two opposing sides simulating the inside and outside of a real door or gate. Due to this definition, the gate itself is directional in itself so that the sense of direction is automatically incorporated in the definition of the gate. In other words, each of the present gates has its meaningful direction and is completely situation-aware. They are self-contained units that do not need further explanation or designation.

A further advantage is that the directional gate may defined in an single definition step. This makes the method and apparatus according to the invention convenient to use. Since the moving directions of an object through a gate has already been designed into the gate, a user of the apparatus or method, when designing the tracking scheme of a video scenario, only needs to draw gates without having to designate the direction afterwards.

In further preferred embodiments three different types of gates are defined, together enabling the simulation of all conceivable real life gates and doors.

In a first preferred embodiment the first and second side are representative of the inner side and outer side of a gate of a single-direction entrance type, wherein the step of generating a signal is performed only on the condition that the object has first crossed the inner side and then crossed the outer side of the gate.

In a second preferred embodiment the first and second side are representative of the inner side and outer side of a gate of a single-direction exit type, wherein the step of generating a signal is performed only on the condition that the object has first crossed the outer side and then crossed the inner side of the gate.

In a third preferred embodiment the first and second side are representative of the inner side and outer side of a gate of a bi-direction type, wherein the step of generating a signal is performed on the condition that the object has first crossed any of the outer side and inner side and then crossed the opposite side of the gate.

In a further embodiment the gate is a quadrangle, for instance a rectangle, a parallelogram or any other suitable form, with two opposite sides defining the first and second sides and two opposite sides defining the further sides. One of the advantages of this embodiment is that essentially any real gate in the 3D world can be simulated. For instance, because of projective deformation any real-life gate having a rectangular shape will be projected into a 2D image with a non-rectangular quadrangle. It is to be understood that in other embodiments of the invention one or more of the sides or even all sides may be curved. In these embodiments the number of corner points may be reduced or corner points may be completely absent. In other embodiments the further sides may even shrink into one point (corresponding to a length equal to 0) as long as the remaining sides form a closed loop and the width of the gate should be larger than 0.

In a typical gate according to the invention the length (L) is defined somewhat (in practice about 10-20%) larger than the real-life gate shown on the video image. Furthermore the width (W) of the gate is an important aspect. In general, the larger it is, the more robust the gate is against noises and random loitering. In practice the length (L) of the first and second sides is essentially larger than the length (W) of the further sides, in typical situations the ratio L/W > 4.

The first and second side of the gates may extend parallel to one another, but in a different embodiment the first side may extend obliquely to the second side. In fact, the shape of the gate may be made to essentially correspond to any real life gate or door, for instance by drawing lines forming a closed loop of the gate on the video image(s) captured by the video system, as will be explained hereafter. The method may involve in this case the steps of receiving from an operator the positions of at least two corner point, generating the gate on basis of the received positions of the corner points and possibly superimposing the generated gate on the video image(s). In another embodiment a quadrangle-shaped gate is defined by having the operator drag its four corner points to fit exactly with any physical gates, after which the virtual gate may be automatically generated.

The three types of gates introduced above are a set of basic components. Based on the basic components one can build a practically unlimited number of other more complex gates or even define protected regions partly or entirely surrounded by gates. Therefore the step of defining at least one gate comprises in a further embodiment the step(s) of defining a plurality of gates and interconnecting the gates so as to form a combined gate. The gates may be of two or three different types, depending on the specific application the gates are used for.

The output signal indicating that a tracked object has passed the gate may take various forms and may be used for various applications. The output signal may be representative of the number of objects that has passed the gate in a predefined time interval, for example the number of vehicles on a highway. In another application the output signal is representative of an event triggering a warning signal, for instance of a vehicle has passed the gate in the wrong direction.

According to another aspect of the present invention an apparatus for monitoring a moving object in video images is provided, the apparatus comprising:
- a receiver for receiving a plurality of video images;
- a processor operative so as to:

- define in the video-images at least one gate having sides forming a closed loop, the loop including at least a first side, a second side opposite the first side, and one or more further sides arranged between the first and second sides so as to define the extent of the gate;
- track the moving object in the video-images;
- generate a signal indicating that a tracked object has passed the gate on the condition that a) the moving object has crossed one of the first side and the second side of the gate, b) the moving object has temporarily stayed inside the gate; and c) the moving object has crossed the opposite side of the gate.

In a preferred embodiment the processor is operative so as to define a single-direction entrance type gate wherein the first and second side are representative of respectively the inner side and outer side of the gate and so as to generate a signal when the object has first crossed the inner side and then crossed the outer side of the gate.

In a further preferred embodiment the processor is operative so as to define a single-direction exit type gate wherein the first and second side are representative of respectively the inner side and outer side of the gate and so as to generate a signal only when the object has first crossed the outer side and then crossed the inner side of the gate.

In a still further embodiment the processor is operative so as to define a bi-direction type gate wherein the first and second side are representative of respectively the inner side and outer side of the gate and so as to generate a signal when the object has first crossed any of the outer side and inner side and then crossed the opposite side of the gate.

In a further preferred embodiment the apparatus comprises input means so as to enter the positions of at least two corner points of the gate on a video image. The processor then will process the entered information and generate a gate on basis of the received positions of the corner points. Preferably the generated gate is drawn on the screen on which the video images are shown by superimposing the same on the video images. This will give the operator a sufficient feedback during the gate definition phase.

In a further embodiment the receiver comprises:
- at least one video sensing device for capturing video-information;
- a convertor for converting the video-information into video pixels forming respective video images. In some situations the vide images received by the apparatus are from an external source, for instance from remote cameras connected to the apparatus through a network, such as internet or a telecommunications network, in other situations the video sensing device and convertor are part of the apparatus itself.

According to another aspect of the present invention a data carrier is provided, the data carrier containing a recorded computer program product, upon whose execution by a computer system the method as defined herein is carried out.

According to another aspect of the present invention a computer program for carrying out, when run on a computer system, the steps of the method as defined herein is provided.

Further advantages, features and details of the present invention will be elucidated on the basis of the following description of preferred embodiments thereof. Reference is made in the description to the figures, in which:
Figure 1 is a schematic representation of a preferred embodiment of an apparatus according to the present invention;
Figure 2 shows a schematically a video image of a first example in which two gates according to an embodiment of the present invention are defined;
Figure 3 is a representation of a one-direction exit gate according to an embodiment of the invention;
Figure 4 shows a schematically a video image of a second example in which two gates according to an embodiment of the present invention are defined;
Figure 5 is a representation of a one-direction entrance gate according to an embodiment of the invention;
Figure 6 is a representation of a bi-direction gate according to an embodiment of the invention; and
Figure 7 is a representation of a combination of several gates.

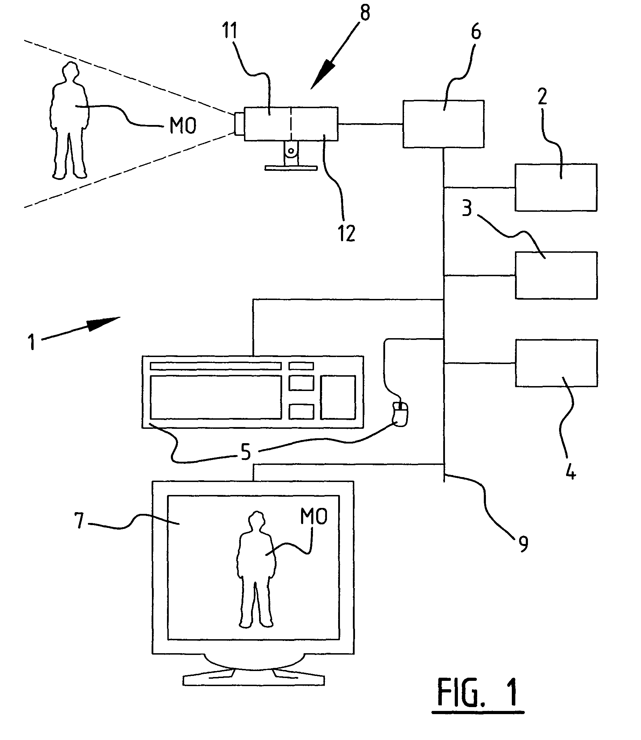

Fig. 1 shows an embodiment of an image processing system 1 in which the method for monitoring moving objects in accordance with the invention may be implemented. The image processing system 1 includes at least a processor 2, for instance a microprocessor, central processing unit, microcontroller, digital signal processor or any other data processing element that may be utilized in a given image processing system, a storage device 3, for instance a hard disk drive, an optical disk drive or any other similar device, an electronic memory 4, one or more input/output devices 5, for instance a keyboard and/or a pointing device such as a computer mouse, and any other suitable input/output device, a controller 6 and a display device 7, for instance a CRT or LCD device, all of which are connected to communicate over a set 9 of one or more system buses or other type of data connections. Connected to the image processing system 1 is a video system, in the embodiment shown formed by a video camera 8. The video camera 8 of the video system may for instance be standard CCD video camera for capturing optical signals in the frequency range of visible light. Alternatively or additionally the video system may comprise an infrared camera or any other suitable type of image capturing device. It should therefore be understood that the term "camera" as used herein is intended to include any type of video system having any type of image capturing device as well as any configuration of multiple such devices. The camera 8 comprises optical elements 11, such as a lens, for capturing the optical information within the field of view 10 of the camera, and a converter 12 for converting the captured optical information into a signal representative of video pixels forming the consecutive video images.

It is to be understood that individual parts of the image processing system 1 may represent corresponding parts of an otherwise conventional desktop or portable computer, as well as portions or combinations of these and other processing devices. Moreover, in other embodiments of the invention, some or all of the functions of the processor 2, storage 3, memory 4, controller 6 and/or other elements of the system 1 may be combined into a single device.

In operation, the image processing system 1 generates a video signal including a sequence of video images of an area monitored by the camera 8. The camera 8 arranged in such a way that the moving object (MO) or objects to be detected and tracked are within the field of view 10 of the camera 8. The video information formed by a sequence of images generated by the camera 8 is then processed in the image processing system 1 using object detecting and tracking techniques that as such are known in the art. A moving vehicle detected by the image processing system 1 is assigned an indicator, for instance a coloured rectangle, superimposed on the video image and moving along with the vehicle. The indicator indicates to the operator the fact that a moving object has been found and also the trajectory followed by the vehicle. When judging the movement of the object and the crossing by the object of a line or area, a specific point on the object, for example the object centre, may be considered to represent the whole object.

The object information extracted from the optical information provided by the camera may further include the object's position, colour, shape, texture expression etc. Once one or more moving objects are thus detected and tracked, the objects may be monitored using the method according to the present invention, as will be described in greater detail below. The output signal of the image processing system 1 includes information about the moving object and may subsequently be used for any object-based application, for instance counting the number of moving objects on a road, protecting sensitive areas and triggering an alarm on intrusion of a protected area.

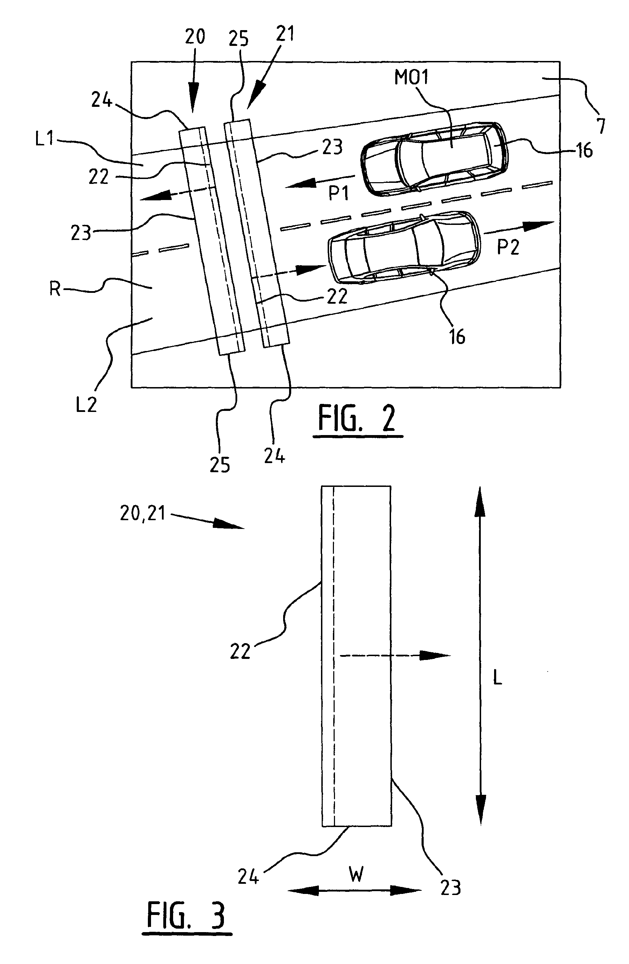

Figure 2 shows a snapshot of the display device 7 of the image processing system 1. In this example the object based application is aimed at counting the number of vehicles moving along a double-track road (R). The road has a first lane L₁ and a second lane L₂. Vehicles normally move in opposite directions. Shown is a first moving object (MO₁), for instance a motor vehicle, moving in the first lane L₁ in direction P₁. Also is shown a second moving object (MO₂) moving in the second lane L₂ in a direction P₂. The image processing system 1 has assigned to the first moving object a first indicator 16, for instance a coloured rectangle superimposed on the video image and moving along with the object, while the second moving object is assigned to another indicator in a similar way. In order to count the number of vehicles moving in the first direction P₁, a first exit gate 20 is defined, while for counting the number of vehicles driving in the opposite direction P₂ a second exit gate 21 is defined. Each gate 20, 21 extends perpendicular to the longitudinal axis of the road and across the entire width thereof so as to be able to capture all vehicles moving in the specific direction, for instance vehicles moving in direction P₁ in the first lane L₁ and vehicles moving in the same direction driving in the second lane L₂, overtaking other vehicles in the first lane. Similarly exit gate 21 is defined for capturing vehicles driving the opposite direction P₂.

In figure 3 an example of a single direction exit gate 20, 21 is shown. The gate in this embodiment is a quadrangle comprising an inner side 22, an outer side 23, an upper side 25 and a lower side 24. The inner and outer sides 22, 23 have a length (L), while the upper and lower side 24, 25 have a width (W). The gate 20, 21 simulates a single direction exit gate like a real-life gate or door. The single direction exit gate 20, 21 only allows objects entering from the inner side, staying temporarily inside the gate and leaving from the outer side, and disregards objects following any other route, i.e. objects entering from any of the outer side, upper side and lower side and objects leaving through any of the inner side, upper side or lower side.

In the example discussed above, by this definition of an exit gate, only vehicles moving along the road in direction P₁ are regarded as being relevant for the process of counting the number of vehicles, while any other object, for instance objects moving in the opposite direction P₂ or any other object unintentionally captured and tracked by the system is disregarded. In a similar way the exit gate 21 for counting the number the vehicles moving in the opposite direction P₂ can be defined. In this case only vehicles moving in the opposite direction entering the inner side 22 and exiting the outer side 23 will be regarded as relevant for the counting process, while any other object(s) will be disregarded.

In a preferred embodiment gates can easily be defined by the operator or user by entering two, three, four or even more positions of corner points of the quadrangle-shaped gate. For instance, a user may superimpose on the display screen 7, using a computer mouse or any other suitable pointing device, the position of the lower left corner point 30 of the gate and the position of the upper right corner 31 of the gate. When both corner points 30, 31 have been entered correctly by the user, the image processing system 1 is programmed to automatically generate the gate by connecting the corner points with lines representing the inner side 22, outer side 23, upper side 25 and lower side 24 of the gate and superimposing the same on the video image.

Returning the example shown in figure 2, the moving vehicle MO₁ will eventually, i.e. a few video images later in time, enter the gate 21 via the outer side 23 and leave the gate via the inner side 22. Since gate 21 is an exit gate defined with its outer side facing the arriving vehicle, the passing of this gate will be disregarded and the signal of the image processing system 1 will be representative of this condition. Then the vehicle MO₁ will reach the second exit gate 20, which is defined with its inner side facing the arriving vehicle. The vehicle now passes the gate 20 in an "allowed" direction and this fact is represented in the output signal of the system 1. Based on the output signal a counter (not shown, but possible implemented in the image processing system 1 itself) is increased by one.

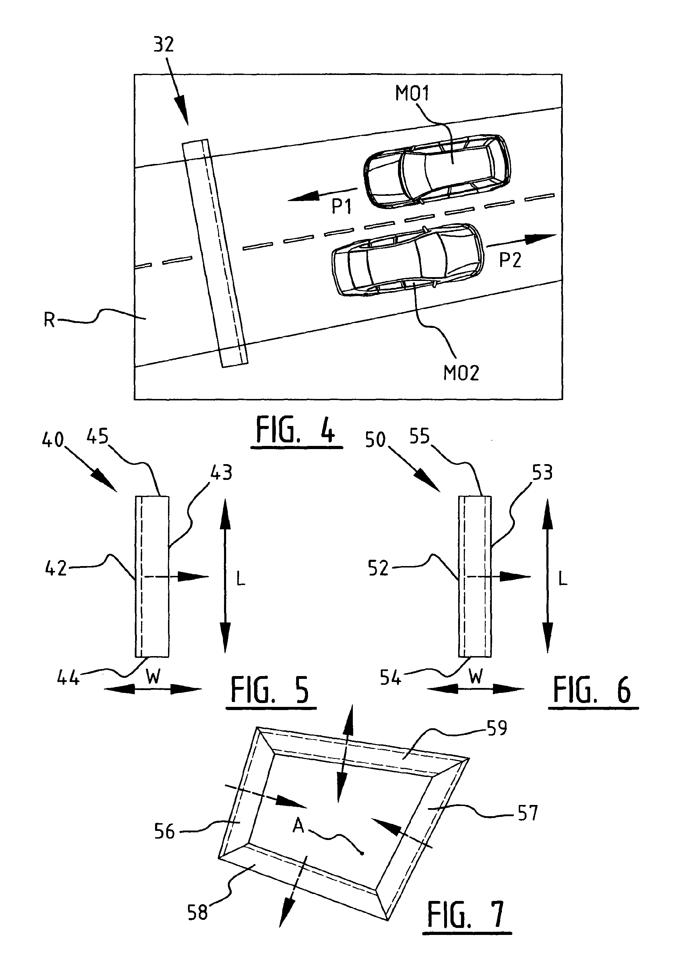

Another example is shown in figure 4. Also in this example the object-based application is aimed at counting the number of vehicles moving along a double-track road (R). However, on the present road is a one-way road. More specifically, the vehicles are only allowed to drive in the first direction P₁, while driving in the opposite direction is prohibited. Therefore one exit gate 32 extending over both the first and second lane of the road R is defined. A vehicle MO₁ moving in the direction P₁, passes the gate 32 in the allowed direction, and the image processing system 1 generates an output signal representative of this fact. In the present example the output signal causes the counter to be increased by one. On the other hand, a vehicle MO₂ moving in direction P₂ passes the gate 32 in the prohibited direction, and the image processing system 1 generates an output signal representative of this fact. In the present example the output signal will not cause the counter to be increased, but may cause an alarm to be triggered or may cause the passing to be logged as a special event.

Figure 5 shows a preferred second embodiment of a gate according to the present invention. In this embodiment the gate is defined as a single direction entrance gate 40. Again the gate is a quadrangle comprising an inner side 42, an outer side 43, an upper side 45 and a lower side 44. The inner and outer sides 42, 43 have a length (L), while the upper and lower side 44, 45 have a width (W). The gate 40 simulates a single direction entrance gate like a real-life gate or door. The single direction entrance gate 40 only allows objects entering from the outer side, staying temporarily inside the gate and leaving from the inner side. The system 1 disregards objects following any other route, i.e. objects entering from any of the inner side, upper side and lower side and objects leaving through any of the outer side, upper side or lower side.

Figure 6 shows another preferred third embodiment of a gate according to the present invention. In the third embodiment the gate is defined as bi-direction or "free" gate 50. Again the gate is a quadrangle comprising an inner side 52, an outer side 53, an upper side 55 and a lower side 54. The inner and outer sides 52, 53 have a length (L), while the upper and lower side 54, 55 have a width (W). The gate 50 simulates a double or bi-direction gate like a real-life gate or door accommodating movements in both directions. The free gate 50 allows objects entering from the outer side 53, staying temporarily inside the gate and leaving from the inner side 52 and objects entering from the inner side 52, staying temporarily inside the gate and leaving from the outer side 53, but disregards objects following any other route.

In the situation described in connection with figure 2 both single-direction exit gates 20,21 are preferably combined into one single "free" gate allowing vehicles travelling in both directions to be counted since definition of only one "free" gate instead of two exit gates (or, for that matter, one exit gate and one entrance gate) reduces the effort by the operator needed to enter the gate in the image processing system.

In the embodiment illustrated the gates have a rectangular shape. However, depending on the situation, any other suitable shape can be defined. Also a combination of gates, of the same type or of different types is possible. For example, suppose we have an area (A) as shown in figure 7, for instance a car park or parking garage, that people or vehicles may enter in only three, predefined directions, while exiting the area is allowed in only two, predefined directions. The tracking gates for this region can then built as in figure 7. The allowed moving directions are indicated by the dashes arrows. Shown are two one-directional entrance gates 56,57, one one-directional exit gate 58 and one bi-directional or free gate 59. Each time a person or vehicle enters or leaves the area in an allowed direction, this event is registered by the image processing system 1. Similarly, each time a person or vehicle enters or leaves the area in a prohibited direction, this event is registered as well and might even trigger an alarm. It is to be understood that the gates may be placed at any location in a video scenario and with any orientation, depending on the object-based application the method and apparatus according to the invention are used for.

The present invention is not limited to the above described preferred embodiments thereof; the rights sought are defined by the following claims, within the scope of which many modifications can be envisaged.

## Claims

1. Method of monitoring a moving object in video images provided by a video system, the method comprising:
- receiving a plurality of video images from the video system;
- defining in the video-images at least one gate having sides forming a closed loop, the loop including at least:
- a first side;
- a second side opposite the first side; and
- one or more further sides arranged between the first and second sides so as to define the extent of the gate;
- tracking the moving object in the video-images;
- generating a signal indicating that a tracked object has passed the gate on the condition that a) the moving object has crossed one of the first side and the second side of the gate; b) the moving object has temporarily stayed inside the gate; and c) the moving object has crossed the opposite side of the gate.

2. Method as claimed in claim 1, wherein the first and second side are representative of the inner side and outer side of a gate of a single-direction entrance type and wherein the step of generating a signal is performed only on the condition that the object has first crossed the inner side and then crossed the outer side of the gate.

3. Method as claimed in claim 1, wherein the first and second side are representative of the inner side and outer side of a gate of a single-direction exit type and wherein the step of generating a signal is performed only on the condition that the object has first crossed the outer side and then crossed the inner side of the gate.

4. Method as claimed in claim 1, wherein the first and second side are representative of the inner side and outer side of a gate of a bi-direction type and wherein the step of generating a signal is performed on the condition that the object has first crossed any of the outer side and inner side and then crossed the opposite side of the gate.

5. Method as claimed in any of the preceding claims, wherein the gate is a quadrangle with two opposite sides defining the first and second sides and two opposite sides defining the further sides.

6. Method as claimed in claim 5, wherein the length (L) of the first and second sides is essentially larger than the length (W) of the further sides.

7. Method as claimed in any of the preceding claims, wherein the step of defining at least one gate comprises defining a plurality of gates and interconnecting the gates so as to form a combined gate.

8. Method as claimed in claim 7, comprising the steps of defining several gates of at least two different types and of interconnecting the same.

9. Method as claimed in claim 7 or 8, comprising defining a protected region surrounded by a plurality of interconnected gates.

10. Method as claimed in any of the preceding claims, wherein the first side extends obliquely to the second side,

11. Method as claimed in any of the preceding claims, wherein the signal is representative of the number of objects that has passed the gate in a predefined time interval.

12. Method as claimed in any of the preceding claims, wherein the step of generating a signal comprises generating a warning signal if an object has passed a gate in a prohibited direction.

13. Method as claimed in any of the preceding claims, wherein the step of defining a gate comprises drawing a closed loop on the video-image.

14. Method as claimed in claim 13, wherein the step of drawing the closed loop comprises receiving from an operator the positions of at least two corner points and generating the gate on basis of the received positions of the corner points.

15. Method as claimed in any of the preceding claims, comprising triggering an event based on the output signal generated.

16. Method as claimed in any of the preceding claims, wherein receiving a plurality of video images from the video system comprises capturing video-information from at least one camera and converting the video-information into video pixels forming respective video images.

17. Method as claimed in any of the preceding claims, wherein the one or more of the further sides have a length (W) equal to 0.

18. Apparatus for monitoring a moving object in video images, the apparatus comprising:
- a receiver for receiving a plurality of video images;
- a processor operative so as to:
- define in the video-images at least one gate having sides forming a closed loop, the loop including at least a first side, a second side opposite the first side, and one or more further sides arranged between the first and second sides so as to define the extent of the gate;
- track the moving object in the video-images;
- generate a signal indicating that a tracked object has passed the gate on the condition that a) the moving object has crossed one of the first side and the second side of the gate, b) the moving object has temporarily stayed inside the gate; and c) the moving object has crossed the opposite side of the gate.

19. Apparatus as claimed in claim 18, wherein the processor is operative so as to define a single-direction entrance type gate wherein the first and second side are representative of respectively the inner side and outer side of the gate and so as to generate a signal when the object has first crossed the inner side and then crossed the outer side of the gate.

20. Apparatus as claimed in claim 18, wherein the processor is operative so as to define a single-direction exit type gate wherein the first and second side are representative of respectively the inner side and outer side of the gate and so as to generate a signal only when the object has first crossed the outer side and then crossed the inner side of the gate.

21. Apparatus as claimed in claim 18, wherein the processor is operative so as to define a bi-direction type gate wherein the first and second side are representative of respectively the inner side and outer side of the gate and so as to generate a signal when the object has first crossed any of the outer side and inner side and then crossed the opposite side of the gate.

22. Apparatus as claimed in any of claims 18-21, comprising input means so as to enter the positions of at least two corner points of the gate on a video-image, wherein the processor is operative so as to generating the gate on basis of the received positions of the corner points.

23. Apparatus as claimed in any of claims 18-22, wherein the receiver comprises:
- at least one video sensing device for capturing video-information;
- a convertor for converting the video-information into video pixels forming respective video images.

24. Apparatus as claimed in any of claims 18-23, wherein the processor is operative so as to perform the method according to any of claims 1-16.

25. Data carrier containing a recorded computer program product, upon whose execution by a computer system the method according to any of claims 1-17 is carried out.

26. Computer program for carrying out, when run on a computer system, the steps of any of the method claims 1-17.
